# EUROPEAN PATENT SPECIFICATION

(11) **EP 0 982 331 B1**
(45) Date of publication and mention of the grant of the patent: **26.10.2005**
(21) Application number: 98306952.7
(22) Date of filing: 28.08.1998
(51) Int. Cl.: C08G 18/08, C08G 18/42, C09D 175/06

(54) **An improved process for the preparation of stable aqueous urethane dispersions**
Ein verbessertes Verfahren zur Herstellung von stabilen wässrigen Urethandispersionen
Un procédé amélioré pour la préparation des dispersions stables aqueuses d'uréthane

(43) Date of publication of application: 01.03.2000
(73) Proprietor: COUNCIL OF SCIENTIFIC AND INDUSTRIAL RESEARCH, New Delhi 110 001 (IN)
(72) Inventor: Ramathan, Lalgudi Srinivasan, Maharashtra (IN); Raut, Kundalik Ganpat, Maharashtra (IN); Srinivasan, Subagiri Ramaswamyiyengar, Maharashtra (IN); Sivaram, Swaminathan, Maharashtra (IN)
(74) Representative: Towler, Philip Dean

(56) References cited:
- EP-A- 0 741 152
- DE-A- 4 343 895
- DE-A- 19 630 905
- CHEMICAL ABSTRACTS, vol. 115, no. 16, 21 October 1991 Columbus, Ohio, US; abstract no. 161322q, XP000388697 & CA 2 027 020 A (XIAO HAN X.; YANG SHI ) 7 April 1991

## Description

This invention relates to a process for the preparation of stable aqueous polyurethane dispersions. More particularly it relates to a process for the preparation of aqueous polyurethane dispersions by reacting a branched polyester polyol, preferably, a polyester polyol containing a long chain triol, having a number average molecular weight of about 300-3000 with:
i. an ionic group of about 2- 100 milliequivalents per 100 gram of prepolymer;
ii. optionally a polyether polyol, preferably poly(propyleneglycol) of molecular weight 500-5000, and
iii. aliphatic or aromatic isocyanate having functionality ≥ 2.

The isocyanate terminated and carboxyl group containing prepolymer prepared as described above,upon neutralisation with amines, preferably, tertiary amines, gives stable aqueous dispersions of polyurethanes.

### Background of the Invention

Polyurethanes are used for a wide range of commercial applications such as adhesives, coatings on different substrates including textiles, plastics, wood, glass fibers and metals due to their extremely good chemical and abrasion resistance, toughness, flexibility and durability. Conventionally, these polyurethane coating products are diluted with organic solvents to get desirable consistency before application. As the coating dries, these organic solvent vapors escape into the atmosphere. This is both economically and environmentally disadvantageous on account of the higher cost of organic solvents, and the pollution and health hazards caused by such fugitive emissions. More importantly, these organic vapors pollute the atmosphere and create serious health hazards.

Many approaches are reported in prior art to form polyurethane coatings from the dispersion of these polymers in water. The use of water is economically advantageous as well as it does not pollute the atmosphere. However, polyurethane polymers are not compatible with water i.e they do not form stable dispersions in water unless special process and/or special monomer(s) are used in their preparation.

One such approach in the prior art is the use of external emulsifiers to disperse and stabilise the polymers in water (US Patent 2,968,575). Though these emulsifiers stabilise the polymer in water, they posses the disadvantage that such coatings are themselves sensitive to water, and hence give poor coating performance in terms of hydrolytic stability. To overcome the above draw back, ionic groups are incorporated into the polyurethane backbone during polymerisation. Upon neuralising these ionic groups the respective salts formed act as an internal emulsifier. One such approach (Neth. Pat. Appln. 6,410,928) discloses the use of cationic ionomers for preparing polyurethane latexes. In another approach (Ger. Offen. 2,744,544) polyurethane production was disclosed using anionic ionomers. The incorporation of nonionic emulsifiers in the polyurethane back bone is disclosed in U.S.Pat 4,190,566. Further improvements in properties of coating derived from polyurethane dispersion are obtained by combining both ionic and non- ionic group in the polymer back bone. This has been disclosed in U.S.Pat 4,238,378.

These prior art patents are related to the production of linear polyurethane dispersions. Coatings derived from these linear polyurethane dispersions possess limited water resistance and do not have good solvent resistance.

Ger Pat. 4,237,965 discloses the production of aqueous polyurethane binders from dimer diol and trimethylol propane as isocyanate reactive group for stoving lacquers. Herein, branching in the diol is expected to increase water resistance along with other important properties. Nevertheless, the externally added short chain triol increases the prepolymer viscosity, resulting in the reduction of the solid content of the dispersion to about 25%. Jap.Pat. 06,329,744 and Jap.Pat. 06,93,068 disclose the production of water dispersible polyurethane resin using trimethylol propane along with other isocyanate reactive components. The externally added short chain triol contributes more to the hard segment of the polymer. Further, crosslinking with aminoplast resins results in coatings with diminished flexibility and more prone to cracking.
Polyurethane dispersions disclosed in the prior art are normally derived from linear diols as one of the isocyanate reactive component and some quantity of short chain triols to impart a certain degree of branching / crosslinking. The main disadvantage of using short chain triols externally are a) undesirable increase in viscosity during prepolymer production b) insufficient branching/crosslinking c) short chain triols contribute more to hard segment and cracking of film is observed d) poor hydrolytic stability.

### Objects of the Invention

Therefore, the object of the present invention is to provide a process for the preparation of stable aqueous polyurethane dispersions which are stable over a wide range of temperature and under high shear force.
Another object of the present invention is to obtain coating with good water and chemical resistance particularly when crosslinked with aminoplast resins.

Yet another object of the present invention is to provide a coating with superior flexibility.

### Detailed Description of the Invention

Accordingly, the present invention provides a process for the preparation of aqueous polyurethane dispersions which comprises preparing an isocyanate terminated carboxyl group containing prepolymer, by preparing a solution of a branched polyester polyol in an organic solvent, adding an ionic group containing compound to this solution, heating this mixture to a temperature ranging between 40°C and 120°C, adding an isocyanate in this reaction mixture, either in presence or absence of a catalyst depending upon the isocyanate, and stirring the mixture for a period ranging between 1 and 16 hours, neutralizing this mixture with a base, cooling the mixture to ambient temperature and dispersing the mixture in water to obtain the product.

In an embodiment of the present invention, the branched polyester polyol has a molecular weight in the range of 300 to 5000 more preferably in the range of 300 to 3000.

In another embodiment the branched polyester polyol contains three or more hydroxyl groups, and has a hydroxyl number between 50 and 100 mg KOH/gm and acid number preferably less than 2 mg. KOH/ gm.

In another embodiment the organic solvent used for preparing the solution of the polyol, may be selected from substantially non-reactive organic solvents to the isocyanate polyaddition reaction containing carbon and hydrogen with or without other elements such as oxygen or nitrogen exemplified by dimethyl formamide, esters, ethers, ketoesters, ketones (e.g acetone and butan-2-one), glycol ether esters, chlorinated hydrocarbons, aliphatic and alicyclic hydrocarbons, pyrrolidones (e.g N-methyl-2-pyrrolidone) hydrogenated furans and aromatic hydrocarbons or mixtures thereof.

In yet another embodiment the ionic group used is an organic compound, containing at least one active hydrogen and at least one group capable of salt formation, and is selected from compounds having the general formula:

(HO)ₘR(COOH)ₙ.

wherein R represents a straight or branched hydrocarbon containing 1 to 12 carbon atoms and m, n represent values between 1 and 3; or other acids including hydroxy, amino hydroxy, amino and mercapto carboxylic acids, sulphonic acids, hydroxy and amino sulphonic acids. Examples include dimethylol propionic acid, oxaluric acid, anilido acetic acid, dihydroxy tartaric acid, 2,6- dihydroxy benzoic acid, glycolic acid, thio glycolic acid, glycine, alpha allanine, 6-amino caproic acid, 2-hydroxy ethane sulphonic acid, 4,6-diamino benzene, 1,3-disulphonic acid and 2-amino diphenylamino sulphonic acid.

In still another embodiment the concentration of the ionic group is in the range of 2 to 100 milliequivalents, preferably 2- 80 milliequivalents, more preferably about 10 - 60 milliequivalents and most preferably about 15 - 50 milliequivalent.

In another embodiment the organic diisocyanate is (cyclo) aliphatic, or aromatic, (Cyclo) aliphatic isocyanates are the most preferred one because of better UV/weathering properties of the derived film, exemplified by 2,2,4-trimethyl hexamethylene diisocyanate, 1,4-tetramethylene diisocyanate, 1,6-hexamethylene diisocyanate(HDI), isophorone diisocyanate(IPDI), 4,4'-methylene-bis- (cyclohexane diisocyanate), meta or para- tetramethyl xylene diisocyanate and α, α'-xylylene diisocyanate. Examples of suitable aromatic diisocyanates are toluene diisocyanate, 1,4 phenylene diisocyanate, 4,4'- diphenyl methane diisocyanate, meta or para-tetramethyl xylene diisocyanate. In addition to organic diisocyanates, polyfunctional isocyanates can be used in place of, or in combination with diisocyanates. Suitable higher polyisocyanates include 2,4,6-triisocyanato toluene, 4,4',4"- triisocyanate triphenyl methane, 1,2,4- benzene triisocyanate, biurets of diisocyanates, a trimer of HDI, IPDI and TMP (3 D Trimethylol propane) adducts of TDI (Toluene diisocyanate), IPDI, HDI, MDI (Methylene diisocyanate), and TMXDI (3 D Tetramethyl xylene diisocyanate).

In another embodiment of the present invention, catalyst may be optionally used to enhance the isocyanate - hydroxyl reaction. Suitable catalysts include triethylene diamine, morpholine, N-ethylmorpholine, piperazine, triethanolamine, triethylamine, dibutyltindilaurate, stannous octoate, dioctyl tin di acetate, lead octoate, stannous tallate and dibutyltindioxide.

In still another embodiment of the present invention, the base used for neutralization is selected from primary, secondary, tertiary amines and / or alkali metal hydroxides such as substituted tertiary amines exemplified by, trimethylamine, triethylamine, triisopropylamine, tributylamine, N,N-dimethylcyclohexylamine, N,N-dimethylstearylamine, N,N-dimethylaniline, N-methylmorpholine, N-ethylmorpholine, N-methylpiperazine, N-methyl-2-pyrrollidone, N-methylpiperidine, N,N-dimethylamino ethanol, N,N-diethylethanolamine, triethanolamine, N-methyldiethanol amine, dimethylamino propanol, 2-ethoxyethyldimethylamine, N-hydroxyethylpiperazine, 2-(2-dimethyl amino ethoxy) ethanol and 5-diethyl amino-2-pentanone., or alkali metal hydroxides like NaOH, KOH, LiOH.

In a feature of the present invention the branched polyester polyols are prepared by condensation polymerisation reaction between a hydroxyl and/or carboxyl terminated linear polyester and a polyfunctional polyol of low molecular weight. The linear polyesters are normally prepared from dibasic acids and a diol. Dibasic acids include, adipic acid, succinic acid, sebasic acid, azelaic acid, isophthalic acid, 1,4 - cyclohexane dicarboxylic acid, phthalic acid, terephthalic acid, tetrahydro phthalic acid, phthalic anhydride and tetrahydro phthalic anhydride. Suitable diols include ethylene glycol, 1,2-propyleneglycol, 1,3-propyleneglycol, diethylene glycol, 1,4-butane diol, 1,3-butane diol, 1,6-hexane diol, 1,8-octane diol, neopentyl glycol, 2-methyl-1,3- propane diol and 1,4-cyclohexane dimethanol. Low molecular weight polyfunctional polyols include trimethylol propane, ditrimethylol propane, 1,2,6-hexane triol (its isomers), pentaerythrytol, di and tripentaerythrytol, sorbitol and glycerine. Polyesterification reactions are self catalysed by the carboxyl groups of the acid components, but, since the concentration of these groups decreases with increasing conversion, other catalysts are often employed to maintain the rate of reaction. Catalysts include protonic acids, lewis acids, titanium alkoxides, and dialkyl tin (IV)oxides. Strongly acidic catalysts tend to promote discolouration and hydrolysis of the product unless they are neutralised and removed from the polyesters. It is preferred to use the approach via condensation with excess diol followed by base catalysed alcoholysis to obtain high molecular weight.

In another feature of the present invention in combination with the branched polyester polyol the following polyols can optionally be used.
1. Linear polyester polyols which are derived from the reaction of dicarboxylic acids and diols.
2. Linear or branched polyether polyols preferably linear like polyethylene glycol, polypropylene glycol and the like and more preferably polypropylene glycol of molecular weight 300 - 3000
3. Polylactones e.g, polymers derived from the reaction of ε-caprolactone with dihydric alcohols.
4. Polycarbonates normally derived by the reaction of diols and diaryl carbonates or phosgene.
5. Polythioethers, polythioether esters, polythio mixed ethers.
6. Polyacetals which are formed from the reaction of diols and formaldehyde.

In another feature of the present invention the solvent amount should be sufficient to provide the prepolymer having a sufficiently low viscosity to enhance the formation of urethane dispersion. Low boiling solvents like acetone, methyl ethyl ketone are very often mixed with high boiling solvents, during the preparation of urethane prepolymer. Advantageously, the low boiling solvents can be removed from the dispersion either by vacuum distillation or by thin film evaporation. The high boiling solvents on the other hand are normally retained in the dispersion and enhance the coalescence of the dispersed particles during the process of film formation.

In yet another feature of the present invention normally primary, secondary and hydroxyl group containing amines are not preferred because they react with the free isocyanates of the prepolymer and thereby act as a chain terminator or chain extender rather to play the role of neutralising agent.

In still another feature of the present invention the isocyanate terminated carboxyl group containing prepolymr is prepared by reacting branched polyester polyol, an ionic group bearing organic compound and an organic diisocyanate. The above components can be reacted simultaneously or sequentially to produce random or block copolymers respectively. Normally the ratio of isocyanate group to active hydrogen containing group is maintained between 1.05 and 3, preferably about 1.2 to 2 and most preferably about 1.3 to 1.6 on an equivalent basis. The temperature of the reaction between isocyanate and the isocyanate reactive groups is maintained normally below 150°C and more preferably about 40 - 120°C, and most preferably about 60-100°C. It is desirable to use an isocyanate non reactive solvent during the prepolymer production to ensure better temperature control.

The neutralisation step may be carried out preferably before the formation of the prepolymer i.e treating the component containing ionic group(s) and more preferably during dispersion stage i.e., addition of part or all neutraliser into water and most preferably after prepolymer formation but prior to dispersion step. During neutralisation the temperature is maintained between 20 and 150°C, but normally conducted below 100°C and more preferably between 30 and 80 °C and most preferably between 50 and 70°C, with good agitation. Dispersion step can be carried out by any one of the following ways.
a) Water is added to the neutralised prepolymer with good stirring.
b) Unneutralised prepolymer is added to water containing the neutralising agent.
c) Neutralised prepolymer is added to water with good agitation.

When dispersion is carried out according to step (a), initially viscosity pickup is observed. This is because, organic phase is continuous initially and as water addition is continued a phase change will occur, and viscosity of the dispersion is reduced. When dispersion is carried out in accordance with step (b), chain extension of isocyanate group takes place before neutralisation. This eventually leads to higher particle size of the final dispersion. Also, the dispersion step is obviated. This problem can be solved by the incorporation of more hydrophilic moieties and/or neutralising agent to water. Coating obtained from these dispersion becomes more sensitive to water due to more hydrophilic centers. In the present invention dispersion is carried out according to step (c) i.e., prepolymer is added to water. The temperature of the prepolymer is maintained below 120°C, more preferably between 30 and 100°C and most preferably between 50-80°C. The water temperature is normally maintained below 80°C, more preferably at 50°C and most preferably between 25 and 40°C . Using this dispersion technique, it is possible to control viscosity pickup and higher particle size buildup of the dispersion obtained from step (a) and (b) respectively.

The urethane dispersion obtained by this invention is branched and/or crosslinked (particularly via allophanate linkages). These dispersions dry at ambient temperature and find applications in coating industry preferably as an architectural paint, and leather coatings. The air dried film exhibits good water and chemical resistance. However, to meet the stringent specifications defined by the Original Equipment Manufacturers the polyurethane dispersions obtained by the present invention are crosslinked with aminoplast resins and cured at suitable temperature resulting in films with excellent water, chemical, abrasion, weather resistance. Amino plast resins used in the present invention include, melamine formaldehyde (MF), urea formaldehyde (UF) and other formaldehyde based resin system. Crosslinking takes place at elevated temperature normally above 80°C, more preferably between 100 and 160°C and most preferably between 120 and 140°C. The amount of aminoplast resin normally varies from 3 to 20 parts per hundred of resin (phr), more preferably between 5 and 15 phr, and most preferably between 7 and 12 phr.

The single component polyurethane dispersions thus obtained are stable over a wide range of temperatures, possess good shear resistantance. The particle size is generally below 1.0 µ preferably between .001 µ and 0.5 µ. The average particle size is less than about 0.5 µ and preferably between 0.01 and 0.2 µ. A very small particle size thus obtained by the present invention enhances the stability of the dispersion and also the surface gloss of dried film.

The process for the present invention is described herein below with examples which are illustrative only and should not be construed to limit the scope of the present . invention in any manner.

### EXAMPLE 1:

This example illustrates the preparation of aqueous polyurethane from a branched polyester polyol, derived from trimethylol propane. These polyesters were prepared by mixing 576.2 g adipic acid, 410.8 g neopentyl glycol and 36.0 g xylene in a four neck two litre flask equipped with a thermometer, a glass tube for nitrogen sparging, a Dean and Stark trap attached with a double walled condenser and a stirrer with three inch half moon blade. The contents were heated upto 100°C and added 0.6 g of dibutyl tin oxide. The temperature was then increased slowly (10°C/hr) upto 170°C. The reaction was then maintained at that temperature till the removal of 116 mL water. The acid value was around 75 ± 5 milligram KOH/gram of sample. Then 176.4 g of trimethylol propane was added and heating was continued at 220°C ± 20°C during which time an additional 28 mL of water was collected. The acid value was ≤ 2 milligram KOH per g resin. The polyester thus obtained had a hydroxyl value 207 milligram KOH per g resin and an acid value 1.35 milligram KOH per g resin. To 180.0 g of the above polyester resin, 20.1 g dimethylol propionic acid and 150 g N-methyl-2-pyrollidone were charged in a four neck two litre flask equipped with a thermometer, a glass tube for nitrogen sparging, a condenser and a stirrer with three inch half moon blade. The contents were heated upto 70°C. The reaction mixture was kept at that temperature for one hour. 149.9 g isophorone diisocyanate was added dropwise using an addition funnel for about 30 min. The temperature was maintained at 70°C during this exothermic reaction. The reaction was continued till the isocyanate value reached 3.4% (thoretical NCO = 4.5%), as determined by dibutyl amine titration. Triethyl amine, 17.1g was then added and stirred well for 10-15 min. 250 g of prepolymer thus obtained was then added to 235 g of water with stirring to give an aqueous polyurethane dispersion with % solid = 36.9, viscosity = 93 cps and pH = 9.03.

### Example 2:

This example concerns the preparation of aqueous polyurethane from a branched polyester polyol, derived from 1,2,6-hexanetriol. These polyesters were prepared by mixing 576.2 g adipic acid, 410.8 g neopentyl glycol and 36.0 g xylene in a four neck two litre flask equipped with a thermometer, a glass tube for nitrogen sparging, a Dean and Stark trap attached with a double walled condenser and a stirrer with three inch half moon blade. The contents were heated upto 100°C and added 0.6 g of dibutyl tin oxide. The temperature was then increased slowly (10°C/hr) upto 170°C. The reaction was then maintained at that temperature till the removal of 116 mL water. The acid value was around 75 ± 5 milligram KOH/gram of sample. Then 176.4 g of 1,2,6-hexanetriol was added and heating was continued at 220°C ± 20°C during which time an additional 28 mL of water was collected. The acid value was ≤ 2 milligram KOH per g resin. The polyester thus obtained had a hydroxyl value 207 milligram KOH per g resin and an acid value 1.35 milligram KOH per g resin.

To 180.0 g of the above polyester resin, 20.1 g dimethylol propionic acid and 150 g N-methyl-2-pyrollidone were charged in a four neck two litre flask equipped with a thermometer, a glass tube for nitrogen sparging, a condenser and a stirrer with three inch half moon blade. The contents were heated upto 70°C. The reaction mixture was kept at that temperature for one hour. 149.9 g isophorone diisocyanate was added dropwise using an addition funnel for about 30 min. The temperature was maintained at 70°C during this exothermic reaction. The reaction was continued till the isocyanate value reached 3.4% (thoretical NCO = 4.5%), as determined by dibutyl amine titration. Triethyl amine, 17.1g was then added and stirred well for 10-15 min.. 250 g of prepolymer thus obtained was then added to 235 g of water with stirring to give an aqueous polyurethane dispersion with %solid = 35.82, viscosity = 524 cps and pH = 8.87.

### Comparitive Example 1:

A linear polyester polyol is prepared by charging 596.5 g adipic acid, 566.9 g neopentyl glycol and 36.0 g xylene in a four neck two litre flask equipped with a thermometer, a glass tube for nitrogen sparging, a Dean and Stark trap attached with a double walled condenser and a stirrer with three inch half moon blade. The contents were heated upto 100°C and 0.6 g of dibutyltinoxide was added. The temperature was then increased slowly upto 220°C. The temperature was maintained at 220°C ± 2°C, till the acid value reaches ≤ 2 milligram KOH per g resin. The polyester thus obtained had hydroxyl value of 145 milligram KOH per g resin and an acid value of 2.06 milligram KOH per g resin. To 217.5 g of the above polyester resin, 19.5 g dimethylol propionic acid and 150 g N-methyl-2-pyrollidone were charged in a four neck 2 litre flask equipped with a thermometer, a glass tube for nitrogen sparging, a condenser and a stirrer with three inch half moon blade. The contents were heated upto 70°C. The reaction mixture was held at this temperature for one hour. 113.1 g isophorone diisocyanate was added drop wise using an addition funnel for about 30 min. The temperature was maintained at 70°C during this exothermic reaction. The reaction was continued till the isocyanate value reaches 1.21 % (thoretical NCO = 4.5%), which was determined by dibutyl amine titration. 15.6 g triethyl amine was then added and stirred well for 10-15 min. 250 g of prepolymer thus obtained was then added to 235 g of water with stirring to give an aqueous polyurethane dispersion with % solid = 38.8, viscosity = 46.4 and pH = 7.4.

### Comparitive Example 2:

This example illustrates the addition of short chain triol(trimethylol propane) to a linear polyester and processing urethane dispersion thereof. The linear polyester polyol is prepared by charging 106.8 g adipic acid, 101.6 g neopentyl glycol and 6.5g xylene in a four neck two litre flask equipped with a thermometer, a glass tube for nitrogen sparging, a Dean and Stark trap attached with a double walled condenser and a stirrer with three inch half moon blade. The contents were heated upto 100°C and 0.12 g of dibutyltinoxide was added. The temperature was then increased slowly upto 220°C. The temperature was maintained at 220° ± 2°C, till the acid value reaches ≤ 2 milligram KOH per g resin. The polyester thus obtained had hydroxyl value of 145 milligram KOH per g resin and an acid value of 2.06 milligram KOH per g resin.
To the 195.5g polyester polyol thus obtained, charged 2.9 g trimethylol propane, 19.8 g dimethylol propionic acid and 150.0 g N-methyl-2-pyrollidone in a four neck two litre flask equipped with a thermometer, a glass tube for nitrogen sparging, a condenser and a stirrer with three inch half moon blade. The contents were heated upto 70°C. The reaction mixture was kept at that temperature for one hour. 131.8 g isophorone diisocyanate was added drop wise using an addition funnel for about 30 min. The temperature was maintained at 70°C during this exothermic reaction. The reaction was continued till the isocyanate value reached 4.00 % (thoretical NCO = 3.96%), which was determined by dibutyl amine titration. 15.0 g triethyl amine was then added and stirred well for 10-15 min. 200 g of prepolymer thus obtained was then added to 235 g of water with stirring gives a polyurethane dispersion with % solid = 35.63, viscosity = 27.6 cps and pH = 8.83.

### Comparitive Example 3:

This example differs from comparitive example 2 in such a way that here, 1,2,6-hexane triol was used in place of trimethylol propane. A linear polyester polyol is prepared by charging 106.8 g adipic acid, 101.6 g neopentyl glycol and 6.5g xylene in a four neck two litre flask equipped with a thermometer, a glass tube for nitrogen sparging, a Dean and Stark trap attached with a double walled condenser and a stirrer with three inch half moon blade. The contents were heated upto 100°C and 0.12 g of dibutyltinoxide was added. The temperature was then increased slowly upto 220°C.

The temperature was maintained at 220°C ± 2°C, till the acid value reaches ≤ 2 milligram KOH per g resin. The polyester thus obtained had hydroxyl value of 145 milligram KOH per g resin and an acid value of 2.06 milligram KOH per g resin. To the 195.5g polyester polyol thus obtained, charged 2.9 g 1,2,6-hexane triol, 19.8 g dimethylol propionic acid and 150.0 g N-methyl-2-pyrollidone in a four neck two litre flask equipped with a thermometer, a glass tube for nitrogen sparging, a condenser and a stirrer with three inch half moon blade. The contents were heated upto 70°C. The reaction mixture was kept at that temperature for one hour. 131.8 g isophorone diisocyanate was added drop wise using an addition funnel for about 30 min. The temperature was maintained at 70°C during this exothermic reaction. The reaction was continued till the isocyanate value reached 3.8 % (thoretical NCO = 3.96%), which was determined by dibutyl amine titration. 15.0 g triethyl amine was then added and stirred well for 10-15 min. 200 g of prepolymer thus obtained was then added to 235 g of water with stirring gives a polyurethane dispersion with% solid = 36.23, viscosity = 30.6 cps and pH = 8.95.

The film properties of the aqueous polyurethane dispersions are shown in the following Table. In deriving the data the urethane dispersion was cast on to glass plate and dired at 140°C for 20 minutes. Film properties were evaluated after 24 hours aging at room temperature.

| **PROPERTIES** | **OBSERVATION** | | | | |
|---|---|---|---|---|---|
| | **Example 1** | **Example 2** | **Comparitive Example 1** | **Comparitive Example 2** | **Comparitive Example 3** |
| **TRIOL USED** | TMP based polyester | 1,2,6-hexane triol based polyester | NIL | TMP added externally | 1,2,6 hexane triol added externally |

| **Water resistance** | | | | | |
|---|---|---|---|---|---|
| **a) room temperature (7 days)** | not affected | not affected | hazy after 4hr. | hazy after 24hr. | hazy after 24hr. |
| **b) at 55°C (240 hr)** | slight blisters after 4 days | not affected | fails | fails | fails |
| **c) at 80°C (2hr)** | slight blisters hazy after 1 hr | not affected | fails | fails | fails |
| **MEK (double rubs)** | 75 | 75 | 25 | 50 | 50 |
| **Tensile strength (MPa)** | 6.3 | 16.7 | 4.06 | 7.17 | 5.0 |
| **Elongation (%)** | 92.13 | 126.07 | 25.86 | 166.2 | 151.4 |
| **Scratch hardness (gram)** | 2000 | > 2200 | 1800 | 1800 | 1800 |

The main advantage of the polyurethane dispersion obtained by the present invention is that they are suitable for coatings and non coating applications such as adhesives and sealants. They can be applied to a wide range of substrates such as plastics, metal,leather, paper, textiles, wood, concrete, porcelain, glass fibers for antistatic and crease resistance finishing, as a binder for printing inks. They are extremely suitable for chip resistance and weather resistance coating in automotive application, for furniture and air craft. Additionally, they are valuable cobinders for acrylic emulsion to improve flexibility, scuff resistance, water and chemical resistance. They can be applied on surface by means of brush, roller, spray and the like. Polyurethane dispersions obtained from the present invention showed better hardness coupled with flexibility and good hydrolytic stability. Urethane dispersion obtained by the present invention is largely unaffected by electrolytes and may be pigmented with electrolyte active dyes or pigments. Urethane dispersion mixed with aminoplast resins are stable over a wide range of temperature, shelf stable, storable and transportable. The dispersions are compatible with other dispersions for e.g. PVA, polyethylene, polystyrene, polybutadiene, PVC, polyacrylate and the like. The dispersions can easily be compounded with fillers, pigments (organic and inorganic), dyes, plasticisers and other additives such as silicones and thickeners.

## Claims

1. A process for preparation of aqueous polyurethane dispersions which comprises preparing an isocyanate terminated carboxyl group containing prepolymer, by preparing a solution of a branched polyester polyol in an organic solvent, adding an ionic group containing compound to the solution, heating this mixture to a temperature ranging between 40°C and 120°C, adding an isocyanate in this reaction mixture, either in the presence or absence of a catalyst depending upon the isocyanate, and stirring the mixture for a period ranging between 1 and 16 hours, neutralizing this mixture with a base, cooling the mixture to ambient temperature and dispersing the mixture in water to obtain the product.

2. The process as claimed in claim 1 wherein the branched polyester polyols have a molecular weight in the range of 300 to 5000.

3. The process of claim 2 wherein the branched polyester polyols have a molecular weight in the range of 300 to 3000.

4. The process as claimed in any one of claims 1 to 3 wherein the branched polyester polyol contains three or more hydroxyl groups, and has a hydroxyl number between 50 and 100 mg KOH/gm and acid number less than 2 mg KOH/gm.

5. The process as claimed in any one of claims 1 to 4 wherein the organic solvent used for preparing the solution of the polyol is selected from dimethyl formamide, esters, ethers, ketoesters, ketones, glycol ether esters, chlorinated hydrocarbons, aliphatic and alicyclic hydrocarbons, pyrrolidones hydrogenated furans and aromatic hydrocarbons or mixtures thereof.

6. The process as claimed in any one of claims 1 to 5 wherein the ionic group used is an organic compound containing at least one active hydrogen and at least one group capable of salt formation and is selected from compounds having the general formula
(HO)ₘR(COOH)ₙ
wherein R represents a straight or branched hydrocarbon containing 1 to 12 carbons atoms and m, n represent values between 1 and 3; or other acids including hydroxy, amino hydroxy, amino and mercapto carboxylic acids, sulphonic acids, hydroxy and amino sulphonic acids.

7. The process as claimed in claim 6 wherein the organic compound is selected from the group consisting of dimethylol propionic acid, oxaluric acid, anilido acetic acid, dihydroxy tartaric acid, 2,6- dihydroxy benzoic acid, glycolic acid, thio glycolic acid, glycine, alpha allanine, 6-amino caproic acid, 2-hydroxy ethane sulphonic acid, 4,6-diamino benzene, 1,3-disulphonic acid and 2-amino diphenylamino sulphonic acid.

8. The process as claimed in any one of claims 1 to 7 wherein the concentration of the ionic group is in the range of 2 to 100 milliequivalents.

9. The process as claimed in any one of claims 1 to 8 wherein the organic diisocyanate is (cyclo) aliphatic, aromatic and/or polyfunctional.

10. The process of claim 9 wherein said organic diisocyanate is selected from the group consisting of 2,2,4-trimethyl hexamethylene diisocyanate, 1,4-tetramethylene diisocyanate, 1,6-hexamethylene diisocyanate, isophorone diisocyanate, 4,4'-methylene-bis-(cyclohexane diisocyanate), meta or para-tetramethyl xylene diisocyanate, α,α'-xylene diisocyanate, toluene diisocyanate, 1,4 phenylene diisocyanate, 4,4'-diphenyl methane diisocyanate, meta or para-tetramethyl xylene diisocyanate, 2,4,6-triisocyanato toluene, 4,4',4''-triisocyanate triphenyl methane, 1,2,-4-benzene triisocyanate, biurets of diisocyanates, a trimer of 1,6-hexamethylene diisocyanate, isophorone diisocyanate and trimethyl propane, adducts of toluene diisocyanate, isophorone diisocyanate, 1,6-hexamethylene diisocyanate, methylene diisocyanate and 3 D tetramethyl xylene diisocyanate.

11. The process as claimed in any one of claims 1 to 10 wherein a catalyst selected from the group consisting of triethylene diamine, morpholine, N-ethylmorpholine, piperazine, triethanolamine, triethylamine, dibutyltindilaurate, stannous octoate, dioctyl tin di acetate, lead octoate, stannous tallate and dibutyltindioxide is used to enhance the isocyanate-hydroxyl reaction.

12. The process as claimed in any one of claims 1 to 11 wherein the base used for neutralization is selected from primary, secondary, tertiary amines and/or alkali metal hydroxides.

13. The process according to claim 12 wherein said base is a substituted tertiary amine.

14. The process according to claim 13 wherein said base is selected from the group consisting of trimethylamine, triethylamine, triisopropylamine, tributylamine, N,N-dimethylcyclohexylamine, N,N-dimethylstearylamine, N,N-dimethylaniline, N-methylmorpholine, N-ethylmorpholine, N-methylpiperazine, N-methyl-2-pyrrolidone, N-methylpiperidine, N,N-dimethylamino ethanol, N,N-diethylethanolamine, triethanolamine, N-methyldiethanol amine, dimethylamino propanol, 2-ethoxyethyldimethylamine, N-hydroxyethylpiperazine, 2-(2-dimethyl amino ethoxy) ethanol and 5-diethyl amino-2-pentanone.

## Patentansprüche

1. Verfahren zur Herstellung wässriger Polyurethandispersionen, bei dem man ein Isocyanat-terminiertes carboxylgruppenhaltiges Präpolymer herstellt, indem man eine Lösung eines verzweigten Polyesterpolyols in einem organischen Lösungsmittel herstellt, die Lösung mit einer eine ionische Gruppe enthaltenden Verbindung versetzt, dieses Gemisch auf eine Temperatur zwischen 40 °C und 120 °C erwärmt, dieses Reaktionsgemisch mit einem Isocyanat versetzt, in Abhängigkeit vom Isocyanat entweder in Gegenwart oder Abwesenheit eines Katalysators, und das Gemisch über eine Dauer zwischen 1 bis 16 Stunden rührt, dieses Gemisch mit einer Base neutralisiert, das Gemisch auf Umgebungstemperatur abkühlt und das Gemisch in Wasser dispergiert, wobei man das Produkt erhält.

2. Verfahren nach Anspruch 1, wobei die verzweigten Polyesterpolyole ein Molekulargewicht im Bereich von 300 bis 5000 aufweisen.

3. Verfahren nach Anspruch 2, worin die verzweigten Polyesterpolyole ein Molekulargewicht im Bereich von 300 bis 3000 aufweisen.

4. Verfahren nach einem der Ansprüche 1 bis 3, wobei das verzweigte Polyesterpolyol drei oder mehrere Hydroxylgruppen enthält und eine Hydroxylzahl zwischen 5 und 100 mg KOH/g und eine Säurezahl von weniger als 2 mg KOH/g aufweist.

5. Verfahren nach einem der Ansprüche 1 bis 4, wobei das zur Herstellung der Lösung des Polyols verwendete organische Lösungsmittel unter Dimethylformamid, Estern, Ethern, Ketoestern, Ketonen, Glykoletherestern, chlorierten Kohlenwasserstoffen, aliphatischen und alicyclischen Kohlenwasserstoffen, Pyrrolidonen, hydrierten Furanen und aromatischen Kohlenwasserstoffen oder Gemischen davon ausgewählt ist.

6. Verfahren nach einem der Ansprüche 1 bis 5, wobei es sich bei der verwendeten ionischen Gruppe um eine organische Verbindung handelt, die wenigstens einen aktiven Wasserstoff und wenigstens eine zur Salzbildung fähige Gruppe umfasst und ausgewählt ist unter Verbindungen der Formel
(HO)ₘR(COOH)ₙ
ausgewählt ist, worin R für einen geradkettigen oder verzweigten Kohlenwasserstoff mit 1 bis 12 Kohlenstoffatomen und m, n für Werte zwischen 1 und 3 stehen; oder anderen Säuren einschließlich Hydroxy-, Aminohydroxy-, Amino- und Mercaptocarbonsäuren, Sulfonsäuren, Hydroxy- und Aminosulfonsäuren.

7. Verfahren nach Anspruch 6, wobei die organische Verbindung ausgewählt ist unter Dimethylolpropionsäure, Oxalursäure, Anilidoessigsäure, Dihydroxyweinsäure, 2,6-Dihydroxybenzoesäure, Glykolsäure, Thioglykolsäure, Glycin, alpha-Alanin, 6-Aminocapronsäure, 2-Hydroxyethansulfonsäure, 4,6-Diaminobenzol-1,3-disulfonsäure und 2-Aminodiphenylaminosulfonsäure.

8. Verfahren nach einem der Ansprüche 1 bis 7, wobei die Konzentration der ionischen Gruppe 2 bis 100 Milliäquivalente beträgt.

9. Verfahren nach einem der Ansprüche 1 bis 8, wobei das organische Diisocyanat (cyclo)aliphatisch, aromatisch und/oder polyfunktionell ist.

10. Verfahren nach Anspruch 9, wobei das organische Diisocyanat ausgewählt ist unter 2,2,4-Trimethylhexamethylendiisocyanat, 1,4-Tetramethylendiisocyanat, 1,6-Hexamethylendiisocyanat, 1,6-Hexamethylendiisocyanat, Isophorondiisocyanat, 4,4'-Methylen-bis-(cyclohexandiisocyanat), meta- oder para-Tetramethylxylylendiisocyanat, α, α'-Xylylendiisocyanat, Toluoldiisocyanat, 1,4-Phenylendiisocyanat, 4,4'-Diphenylmethandiisocyanat, meta- oder para-Tetramethylxylylendiisocyanat, 2,4,6-Triisocyanatotoluol, 4,4',4"-Triisocyanattriphenylmethan, 1,2,4-Benzoltriisocyanat, Biurethe von Diisocyanaten, einem Trimer von 1,6-Hexamethylendiisocyanat, Isophorondiisocyanat und Trimethylpropan, Addukten von Toluoldiisocyanat, Isophorondiisocyanat, 1,6-Hexamethylendiisocyanat, Methylendiisocyanat und 3D-Tetramethylxylylendiisocyanat.

11. Verfahren nach einem der Ansprüche 1 bis 10, wobei man einen Katalysator zur Beschleunigung der Isocyanat-Hydroxyl-Umsetzung verwendet, der ausgewählt ist unter Triethylendiamin, Morpholin, N-Ethylmorpholin, Piperazin, Triethanolamin, Triethylamin, Dibutylzinndilaurat, Zinn(II)octoat, Dioctylzinndiacetat, Bleioctoat, Zinn(II)tallat und Dibutylzinndioxid.

12. Verfahren nach einem der Ansprüche 1 bis 11, wobei die zur Neutralisation verwendete Base ausgewählt ist unter primären, sekundären, tertiären Aminen und/oder Alkalimetallhydroxiden.

13. Verfahren nach Anspruch 12, wobei die Base ein substituiertes tertiäres Amin ist.

14. Verfahren nach Anspruch 13, wobei die Base ausgewählt ist unter Trimethylamin, Triethylamin, Triisopropylamin, Tributylamin, N,N-Dimethylcyclohexylamin, N,N-Dimethylstearylamin, N,N-Dimethylanilin, N-Methylmorpholin, N-Ethylmorpholin, N-Methylpiperazin, N-Methyl-2-pyrrolidon, N-Methylpiperidin, N,N-Dimethylaminoethanol, N,N,-Diethylethanolamin, Triethanolamin, N-Methyldiethanolamin, Dimethylaminopropanol, 2-Ethoxyethyldimethylamin, N-Hydroxyethylpiperazin, 2-(2-Dimethylaminoethoxy)ethanol und 5-Diethylamino-2-pentanon.

## Revendications

1. Procédé pour la préparation des dispersions aqueuses de polyuréthane qui comprend la préparation d'un prépolymère carboxylé à groupe isocyanate terminal, en préparant une solution d'un polyol de polyester ramifié dans un solvant organique, l'addition d'un composé contenant un groupe ionique à la solution, le chauffage de ce mélange à une température comprise entre 40°C et 120°C, l'addition d'un isocyanate à ce mélange réactionnel, aussi bien en présence qu'en absence,d'un catalyseur selon le type d'isocyanate, et l'agitation du mélange pendant un intervalle de temps compris entre 1 et 16 heures, la neutralisation de ce mélange avec une base, le refroidissement du mélange à température ambiante et la dispersion du mélange dans l'eau pour obtenir le produit.

2. Procédé selon la revendication 1, dans lequel les polyols de polyester ramifiés ont un poids moléculaire compris dans la fourchette allant de 300 à 5000.

3. Procédé selon la revendication 2, dans lequel les polyols de polyester ramifiés ont un poids moléculaire compris dans la fourchette allant de 300 à 3000.

4. Procédé selon l'une quelconque des revendications 1 à 3, dans lequel le polyol de polyester ramifié contient trois ou plus de groupes hydroxyles, et a un indice d'hydroxyle compris entre 50 et 100 mg KOH/g et un indice d'acidité inférieur à 2 mg KOH/g.

5. Procédé selon l'une quelconque des revendications 1 à 4, dans lequel le solvant organique utilisé pour préparer la solution de polyol est choisi parmi le diméthylformamide, les esters, les éthers, les cétoesters, les cétones, les esters d'éther glycolique, les hydrocarbures chlorés, les hydrocarbures aliphatiques et alicycliques, les pyrrolidones, les furannes hydrogénés et les hydrocarbures aromatiques ou des mélanges de ceux-ci.

6. Procédé selon l'une quelconque des revendications 1 à 5, dans lequel le groupe ionique utilisé est un composé organique contenant au moins un hydrogène actif et au moins un groupe capable de salification et est choisi parmi les composés ayant la formule générale :
(HO)ₘR(COOH)ₙ
dans laquelle R représente un hydrocarbure linéaire ou ramifié contenant 1 à 12 atomes de carbone et m, n représentent des valeurs comprises entre 1 et 3; ou d'autres acides incluant des acides hydroxy-, amino hydroxy-, amino- ou mercaptocarboxyliques, des acides sulfoniques, des acides hydroxy- ou aminosulfoniques.

7. Procédé selon la revendication 6, dans lequel le composé organique est choisi dans le groupe consistant en l'acide diméthylol propionique, l'acide oxaloacétique (oxaluric), l'acide anilido acétique, l'acide dihydroxy tartarique, l'acide 2,6-dihydroxy benzoïque, l'acide glycolique, l'acide thio glycolique, la glycine, l'alpha alanine, l'acide 6-amino caproïque, l'acide 2-hydroxy éthane sulfonique, le 4,6-diamino benzène, l'acide 1,3-disulfonique et l'acide 2-amino diphénylamino sulfonique.

8. Procédé selon l'une quelconque des revendications 1 à 7, dans lequel la concentration du groupe ionique est comprise dans la fourchette allant de 2 à 100 milliéquivalents.

9. Procédé selon l'une quelconque des revendications 1 à 8, dans lequel le diisocyanate organique est (cyclo) aliphatique, aromatique et/ou polyfonctionnel.

10. Procédé selon la revendication 9, dans lequel ledit diisocyanate organique est choisi dans le groupe consistant en le 2,2,4-triméthyl hexaméthylène diisocyanate, le 1,4-tétraméthylène diisocyanate, le 1,6-hexaméthylène diisocyanate, le diisocyanate d'isophorone, le 4,4'-méthylène-bis-(cyclohexane diisocyanate), le méta- ou para-tétraméthyl xylène diisocyanate, le α,α'-xylène diisocyanate, le diisocyanate de toluène, le 1,4- phénylène diisocyanate, le 4,4'-diphényl méthane diisocyanate, le méta- ou para-tétraméthyl xylène diisocyanate, le 2,4,6-triisocyanato toluène, le 4,4',4''-triisocyanate triphényl méthane, le 1,2,-4-benzène triisocyanate, les biurets des diisocyanates, un trimère de 1, 6-hexaméthylène diisocyanate, le diisocyanate d'isophorone et le triméthyl propane, les produits d'addition du diisocyanate de toluène, le diisocyanate d'isophorone, le 1,6-hexaméthylène diisocyanate, le méthylène diisocyanate et le 3 D tétraméthyl xylène diisocyanate.

11. Procédé selon l'une quelconque des revendications 1 à 10, dans lequel un catalyseur choisi dans le groupe consistant en la triéthylène diamine, la morpholine, la N-éthylmorpholine, la pipérazine, la triéthanolamine, la triéthylamine, le dilaurate de dibutylétain, l'octoate stanneux, le diacétate de dioctylétain, l'octoate de plomb, le tallate stanneux et le dioxyde de dibutylétain, est utilisé pour stimuler la réaction de l'isocyanate - hydroxyle.

12. Procédé selon l'une quelconque des revendications 1 à 11, dans lequel la base utilisée pour la neutralisation est choisie parmi les amines primaires, secondaires, tertiaires et/ou les hydroxydes de métal alcalin.

13. Procédé selon la revendication 12, dans lequel ladite base est une amine tertiaire substituée.

14. Procédé selon la revendication 13, dans lequel ladite base est choisie dans le groupe consistant en la triméthylamine, la triéthylamine, la triisopropylamine, la tributylamine, la N,N-diméthylcyclohexylamine, la N,N-diméthylstéarylamine, la N,N-diméthylaniline, la N-méthylmorpholine, la N-éthylmorpholine, la N-méthylpipérazine, la N-méthyl-2-pyrrolidone, la N-méthylpipéridine, le N,N-diméthylamino éthanol, la N,N, - diéthyléthanolamine, la triéthanolamine, la N-méthyldiéthanolamine, le diméthylamino propanol, la 2-éthoxyéthyldiméthylamine, la N-hydroxyéthylpipérazine, le 2-(2-diméthyl amino éthoxy)éthanol et la 5-diéthylamino-2-pentanone.
